# FASCICULE DE BREVET EUROPEEN

(11) **EP 3 592 546 B1**
(45) Date de publication et mention de la délivrance du brevet: **02.06.2021**
(21) Numéro de dépôt: 18724940.4
(22) Date de dépôt: 09.04.2018
(51) Int. Cl.: B29D 99/00, B29C 70/24, B29C 70/22, B29C 70/48, B29C 70/54, B29L 31/08, C04B 35/622, C04B 35/80, C04B 35/515

(54) **PROCÉDÉ DE FABRICATION D'UNE PIÈCE EN MATÉRIAU COMPOSITE COMPORTANT UN CORPS PROLONGÉ PAR UNE EXTRÉMITÉ DE FIXATION RENFORCÉE**
VERFAHREN ZUR HERSTELLUNG EINES VERBUNDMATERIALTEILS MIT EINEM DURCH EIN VERSTÄRKTES BEFESTIGUNGSENDE VERLÄNGERTEN KÖRPER
METHOD FOR MANUFACTURING A COMPOSITE MATERIAL PART COMPRISING A BODY EXTENDED BY A REINFORCED ATTACHMENT END

(30) Priorité: 13.04.2017 FR 1753243
(43) Date de publication de la demande: 15.01.2020
(73) Titulaire: Safran, 75015 Paris (FR)
(72) Inventeur: LANFANT, Nicolas Pierre, 77550 Moissy-Crayamel (FR); COUPE, Dominique Marie Christian, 77550 Moissy-Crayamel (FR); FAIVRE D'ARCIER, Pierre, 77550 Moissy-Crayamel (FR)
(74) Mandataire: Brevalex
(86) Numéro de dépôt international: PCT/FR2018/050885
(87) Numéro de publication internationale: WO 2018/189470

(56) Documents cités:
- WO-A1-2013/079860
- DE-A1- 2 927 653

## Description

### DOMAINE TECHNIQUE

L'invention concerne un procédé de fabrication d'une pièce en matériau composite comportant un corps prolongé par une extrémité d'accouplement incluant un trou et présentant une tenue mécanique accrue.

### ÉTAT DE LA TECHNIQUE ANTÉRIEURE

Le document WO2013079860 A1 décrit un procédé de fabrication d'une aube de turbomachine en matériau composite ayant une pale solidaire de plates-formes intérieure et extérieure, le procédé comportant :
- la formation par tissage multicouches d'une ébauche fibreuse ayant une direction longitudinale correspondant à celle de l'aube à réaliser et comprenant dans son épaisseur une première partie avec plusieurs couches de fils liées entre elles par tissage, une deuxième partie tissée et une troisième partie tissée, la première partie étant située entre la deuxième partie et la troisième partie auxquelles elle est reliée par tissage sur une partie seulement de sa dimension longitudinale,
- la formation, à partir de l'ébauche fibreuse, d'une préforme de l'aube à réaliser, par dépliage, de part et d'autre de la première partie, de segments de la deuxième partie et de la troisième partie non liés à la première partie, par mise en forme de la première partie pour former une partie de préforme pour la pale de l'aube à réaliser et par mise en forme des segments dépliés de la deuxième partie et de la troisième partie pour former des parties de préforme pour les plates-formes intérieure et extérieure de l'aube à fabriquer, et
- la densification de la préforme d'aube par une matrice pour obtenir une aube en matériau composite à plates-formes intérieure et extérieure intégrées.

L'invention s'applique notamment à la fabrication d'un redresseur de flux de turbomachine en matériau composite, dont les extrémités sont accouplées à des éléments de structure du moteur, par des vis de fixation, en étant fortement sollicitées en cisaillement.

D'une manière générale, un turboréacteur à double flux comporte une manche dans laquelle l'air est aspiré par les pales d'une soufflante avant d'être divisé en un flux primaire et un flux secondaire qui l'entoure. Le flux primaire circule dans une veine primaire s'étendant entre des éléments de rotor du moteur et une enveloppe intermédiaire qui les entoure. Le flux secondaire circule dans une veine secondaire qui s'étend entre l'enveloppe intermédiaire et une enveloppe externe ou carène du moteur.

Le flux primaire traverse un compresseur situé après la soufflante alors que le flux secondaire est propulsé vers l'arrière pour directement générer une poussée. Après avoir été compressé, le flux primaire atteint une chambre de combustion avant d'être détendu dans une turbine haute pression puis dans une turbine basse pression pour entrainer des étages de compression et la soufflante, avant d'être expulsé vers l'arrière.

Un tel moteur comporte, en aval de la soufflante, un étage de redresseurs de flux secondaire, usuellement désignés par les acronymes OGV signifiant Outlet Guide Vane ou SGV signifiant Structural Guide Vane. Les redresseurs sont orientés radialement et régulièrement répartis autour d'un axe longitudinal de rotation du moteur. Chaque redresseur comporte une partie aérodynamique appelée pale prolongée par deux extrémités d'accouplement en forme de plateformes, permettant la fixation du redresseur à l'enveloppe intermédiaire d'une part et au carter de soufflante qui délimite l'enveloppe externe d'autre part.

En cas de perte d'une pale de soufflante, le carter de soufflante se déforme fortement, ce qui soumet les redresseurs à des sollicitations et contraintes mécaniques élevées au niveau de leurs extrémités par rapport aux contraintes de service. En pratique, les contraintes élevées subies par les extrémités peuvent conduire à l'arrachement des trous de fixation.

L'invention a pour but d'apporter une solution au renforcement d'une extrémité d'accouplement d'une pièce en matériau composite, cette extrémité pouvant être destinée à recevoir des vis de fixation comme dans le cas d'un redresseur de flux ou bien un axe comme dans le cas d'une contrefiche d'atterrisseur ayant une extrémité d'accouplement a une forme de chape.

### EXPOSÉ DE L'INVENTION

A cet effet, l'invention a pour objet un procédé de fabrication d'une pièce en matériau composite comportant un corps prolongé par une extrémité d'accouplement renforcée, comprenant les opérations de :
- formation d'une ébauche fibreuse à partir d'un tissu tridimensionnel comportant des fils de chaine orientés selon une direction principale avec déliaison d'au moins une extrémité de l'ébauche fibreuse pour constituer au moins deux ensembles de couches solidaires ;
- décadrage à plat d'au moins un ensemble de couches solidaires par décalage d'un bord d'extrémité de cet ensemble de couches solidaires en appliquant à ce bord d'extrémité un déplacement de cisaillement orienté parallèlement à l'ensemble de couches solidaires et perpendiculairement à la direction principale, pour incliner les fils de chaîne de cet ensemble de couches solidaires par rapport à la direction principale ;
- mise en forme de l'ébauche fibreuse pour constituer une préforme ;
- injection d'une matrice dans la préforme.

Avec cette solution, l'extrémité est renforcée vis-à-vis des contraintes de cisaillement grâce à l'inclinaison différente qui est donnée aux fibres de chaîne dans l'extrémité. Ceci permet d'accroître la résistance à l'arrachement du ou des trous de l'extrémité d'accouplement, c'est-à-dire de diminuer le risque de rupture en cisaillement.

L'invention concerne également un procédé ainsi défini, dans lequel la déliaison de l'ébauche fibreuse est réalisée durant une opération de tissage du tissu tridimensionnel selon un plan de déliaison parallèle à la direction principale en agençant un cheminement des fils de trame sans traversée du plan de déliaison dans l'extrémité renforcée.

L'invention concerne également un procédé ainsi défini, dans lequel à l'issue de l'opération de décadrage, les fils de chaine sont inclinés d'une valeur angulaire comprise entre +45 degrés et -45 degrés par rapport à la direction principale.

L'invention concerne également un procédé ainsi défini, comprenant l'application d'un moyen de fixation tel qu'un film de colle à une portion de chaque ensemble de couches solidaires décadré pour la maintenir dans en configuration décadrée.

L'invention concerne également un procédé ainsi défini, comprenant l'ajout de fils de fibre de verre, de carbone ou de kevlar par couture dans le sens transverse ou par piqûre à plusieurs ensembles de couches solidaires décadrés pour les maintenir entre eux.

L'invention concerne également un procédé ainsi défini, dans lequel l'extrémité d'accouplement comporte une proportion de fils de trame par rapport aux fils de chaine qui est différente de la proportion de fils de trame par rapport aux fils de chaine dans le corps.

L'invention concerne également un procédé ainsi défini, dans lequel les fils de trame présentent dans l'extrémité renforcée une section inférieure à la section des fils de trame dans le corps.

L'invention concerne également un procédé ainsi défini, appliqué à la fabrication d'un redresseur de flux de turbomachine en matériau composite comprenant un corps formant pale prolongé par au moins une extrémité d'accouplement, dans lequel la direction principale correspond à la direction du corps.

L'invention concerne également un procédé ainsi défini, dans lequel l'extrémité est déliée en plusieurs ensembles de couches solidaires, et dans lequel ces ensembles de couches solidaires sont décadrés de manière équilibrée pour que la somme des angles des fils chaine de chaque ensemble de couches solidaires par rapport à un plan parallèle à la direction principale et normal à ces ensembles de couches solidaires soit nulle.

L'invention concerne également un procédé ainsi défini, dans lequel l'extrémité est déliée en plusieurs ensembles de couches solidaires et dans lequel ces ensembles de couches solidaires sont décadrés de manière symétrique afin de comporter un plan de symétrie pour lequel chaque paire d'ensembles de couches solidaires situées de part et d'autre et à même distance de ce plan de symétrie comporte des fils de chaine ayant la même inclinaison par rapport à un plan parallèle à la direction principale et normal à ces ensembles de couches solidaires.

L'invention concerne également un procédé ainsi défini, dans lequel l'extrémité de l'ébauche fibreuse est déliée en un ensemble de couches solidaires central, un ensemble de couches solidaires supérieur et un ensemble de couches solidaires inférieur, dans lequel l'ensemble de couches solidaires supérieur et l'ensemble de couches solidaires inférieur sont décadrées pour que les fils de chaine de ces ensembles de couches solidaires décadrés soient inclinées d'angles opposées par rapport à un plan qui est normal à l'ensemble de couches solidaires central et parallèle aux fils de chaîne de l'ensemble de couches solidaires central.

L'invention concerne également un procédé ainsi défini, dans lequel les ensembles de couches solidaires déliés sont pliés par rapport au reste de l'ébauche fibreuse pour constituer une extrémité d'accouplement du redresseur, avant injection de la matrice.

### BRÈVE DESCRIPTION DES DESSINS

La figure 1 est une vue d'ensemble en perspective d'un redresseur situé en aval de soufflante ;
La figure 2 est une vue schématique en perspective de l'ébauche fibreuse montrant la déliaison d'une extrémité de cette ébauche en trois ensembles de couches solidaires conformément à l'invention ;
La figure 3 est une vue de dessus montrant l'ensemble de couches solidaires supérieur déliées conformément à l'invention ;
La figure 4 est une vue de dessus de l'ensemble de couches solidaires supérieur de tissu délié durant l'opération de décadrage de l'extrémité de cet ensemble de couches solidaires supérieur conformément à l'invention ;
La figure 5 est une vue schématique en perspective de l'ébauche fibreuse dont l'extrémité l'ensemble de couches solidaires supérieur et de l'ensemble de couches solidaires inférieur ont été décadrés conformément à l'invention ;
La figure 6 est une vue schématique en perspective de l'ébauche fibreuse dont l'extrémité de l'ensemble de couches solidaires supérieur et de l'ensemble de couches solidaires inférieur ont été décadrés conformément à une variante de l'invention ;
La figure 7 est une vue de dessus montrant l'orientation des fils de chaîne dans le corps et dans l'extrémité d'une éprouvette conforme à l'invention ;
La figure 8 est une vue de dessus illustrant la répartition des contraintes en cas de sollicitation en cisaillement dans l'éprouvette conforme à l'invention ;
La figure 9 est une vue de dessus montrant la répartition des contraintes en cas de sollicitation en cisaillement avec une éprouvette selon l'Etat de la technique.

### EXPOSÉ DÉTAILLÉ DE MODES DE RÉALISATION PARTICULIERS

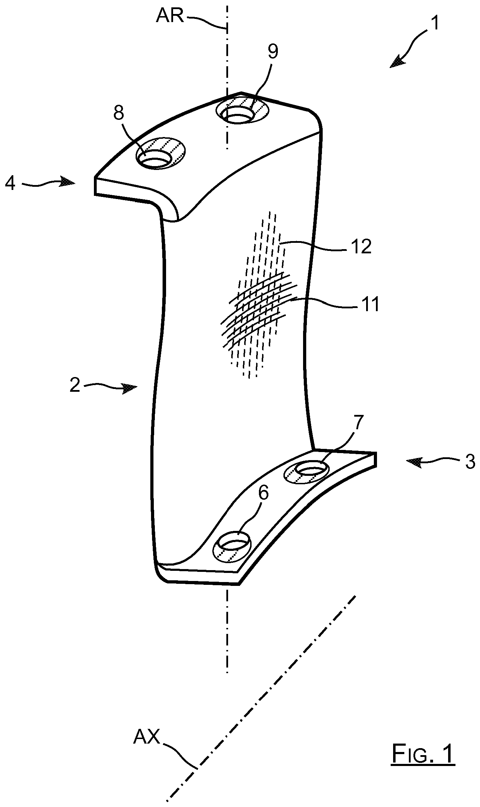

Comme visible sur la figure 1, un redresseur 1 de flux secondaire, destiné à être situé en aval de soufflante, comporte une pale 2, prolongée par une première et une seconde extrémité d'accouplement repérées 3 et 4. Cette pale 2 a une forme sensiblement galbée à contour rectangulaire, et les extrémités d'accouplement 3 et 4 qui la prolongent ont des formes de pattes de fixation constituant des plateformes orientées perpendiculairement à la pale 2.

La pale 2 s'étend selon une direction principale AR correspondant à une direction radiale par rapport à une direction AX correspondant à un axe longitudinal d'un turboréacteur qu'elle est destinée à équiper.

La première plateforme 3 comporte ici deux trous traversants 6 et 7, qui permettent de fixer le redresseur à un élément de l'enveloppe intermédiaire du moteur au moyen de deux vis ou boulons. De manière analogue, la seconde plateforme 4 comporte elle aussi deux trous traversants 8 et 9 destinés à la fixation du redresseur 1 au carter de soufflante du moteur au moyen de deux autres vis ou boulons.

Ce redresseur 1 est fabriqué à partir d'une ébauche fibreuse en tissu tridimensionnel, attendu notamment que le tissu tridimensionnel permet d'obtenir une tenue mécanique suffisante vis-à-vis des impacts, qui correspondent par exemple à de la grêle ingérée par le moteur en service, et venant heurter la pale 2.

Le tissu tridimensionnel est orienté de telle manière que ses fils de chaîne, repérés par 12 s'étendent selon la direction AR, et que ses fils de trame, repérés par 11, s'étendent parallèlement à la direction AX. Dans un tel tissu tridimensionnel, les fils de trame sont tissés pour lier entre elles les différentes couches de fils de chaînes. Chaque couche de fils de chaine s'étend selon un plan parallèle aux axes AX et AR, et ces couches sont superposées les unes aux autres dans le sens de l'épaisseur du corps de pale, c'est-à-dire perpendiculairement aux axes AX et AR.

Chaque fil de trame est constitué de portions serpentant chacune dans un plan normal aux fils de chaîne, pour lier les unes aux autres les différentes couches afin de former un tissu de forte épaisseur ayant sa propre cohérence, c'est-à-dire dont tous les fils se tiennent les uns les autres.

Cette ébauche fibreuse sèche est formée d'un tissu tridimensionnel par exemple de fibres de carbone, et elle est mise en forme selon plusieurs opérations préalables avant d'être installée dans un moule ou analogue pour procéder à l'injection d'une matrice telle qu'une matrice de type organique ou céramique. La pièce brute ainsi obtenue est ensuite soumise à différentes opérations supplémentaires d'usinage et/ou de finitions pour constituer le redresseur fini, c'est-à-dire prêt à être monté dans un moteur.

Néanmoins, il s'avère que dans un tissu tridimensionnel, la tenue aux sollicitations mécaniques de de cisaillement est relativement faible.

Afin d'accroître la tenue mécanique en cisaillement des plateformes de la pale, chaque extrémité de l'ébauche fibreuse de tissu tridimensionnel, encore appelée préforme, comporte une portion qui est déliée pour constituer au moins deux ensembles de couches solidaires, et ces ensembles de couches solidaires sont décadrés à plat avant d'être repliés par rapport à la pale pour constituer la plateforme.

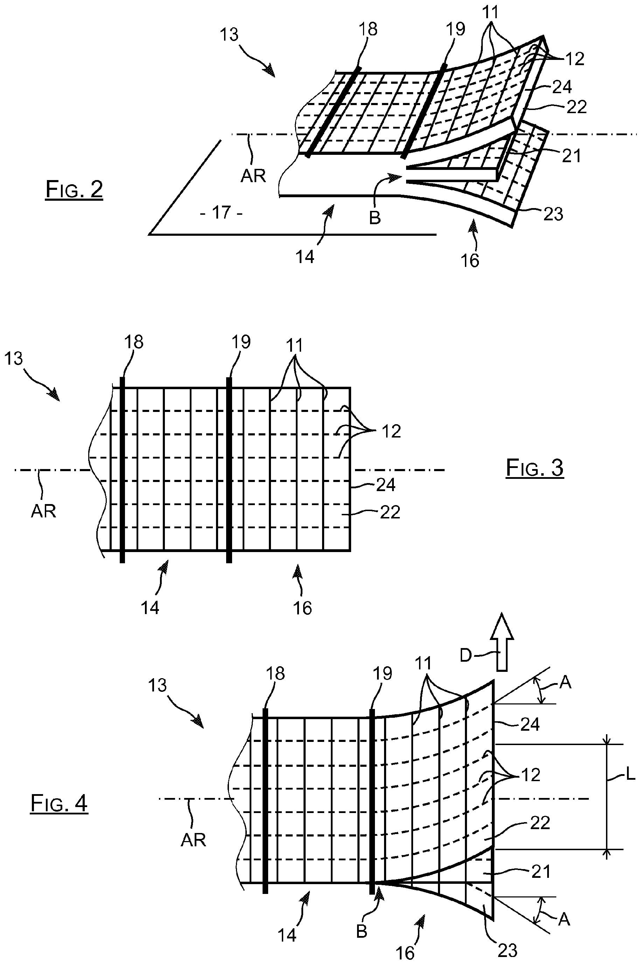

Une ébauche fibreuse 13 de tissu tridimensionnel représentée sur la figure 2 comporte un corps 14 destiné à constituer la pale 2, et une extrémité 16, destinée à constituer l'une des plateformes ou extrémité d'accouplement 3, 4 prolongeant cette pale 2.

Cette ébauche fibreuse 13 est installée et fixée à plat sur un support tel qu'une table de travail 17, par exemple au moyen de mors ou bien de barrettes 18, 19 qui plaquent fermement son corps 14 contre la table 17. Lorsque cette ébauche 13 est installée sur la table 17, elle a une forme globalement parallélépipédique, ses fils de chaîne 12 s'étendant tous parallèlement les uns aux autres sur toute la longueur de cette ébauche, parallèlement à l'axe AR. Les fils de trame 11 s'étendent eux dans des plans normaux aux fils de chaine 12.

Dans l'exemple des figures 2 à 4, l'extrémité est déliée en trois ensembles de couches solidaires distincts, comprenant un ensemble de couches solidaires central 21, un ensemble de couches solidaires supérieur 22 et un ensemble de couches solidaires inférieur 23. La déliaison est réalisée lors du tissage du tissu tridimensionnel selon un plan de déliaison parallèle à la direction principale en agençant le cheminement des fils de trame durant le tissage pour qu'ils ne traversent pas le plan de déliaison dans la zone de déliaison correspondant à l'extrémité de l'ébauche fibreuse, comme indiqué dans le document de brevet WO2013079860.

Le plan de déliaison est orienté parallèlement aux plans des couches de fils de chaîne 12, c'est-à-dire parallèlement à la table 17 dans la configuration des figures. Les ensembles de couches 21 et 22, et les ensembles de couches 22 et 23 sont ainsi déliés les uns des autres.

Lorsque les ensembles de couches solidaires ont été déliés, la situation de l'ébauche fibreuse correspond à celle illustrée sur les figures 2 et 3. Chaque ensemble de couches s'étend depuis son bord d'extrémité, jusqu'à sa base B qui est située au droit de la barrette 19 dans l'exemple des figures, et qui correspond au fond de la déliaison de ces ensembles de couches.

L'extrémité de l'ensemble de couches solidaires supérieur 22 est ensuite décadrée, comme illustré schématiquement sur la figure 4, de manière à incliner les fibres de chaîne de cette extrémité 16 par rapport à leur orientation dans le corps d'ébauche 14.

Cette opération de décadrage consiste à saisir le bord d'extrémité 24 de l'ensemble de couches 22, alors que le reste de l'ébauche de préforme est maintenu en position en étant pressé contre la table 17 par les barrettes 18 et 19, et à le déplacer dans un plan parallèle à l'ensemble de couches solidaires, et donc parallèle à la table dans l'exemple des figures, selon une direction D perpendiculaire à l'axe AR. Le déplacement réalisé correspond ainsi à un déplacement de type cisaillement du bord d'extrémité 24 de l'ensemble de couches supérieur 22 par rapport à sa base B, et il revient à modifier la forme rectangulaire de l'ensemble de couches supérieur 22 en une forme de parallélogramme.

Comme représenté sur la figure 4, à l'issue de cette opération de décadrage, les fils de chaîne 12 de l'ensemble de couches supérieur 22 sont inclinés par rapport à l'axe AR d'un angle noté A, alors que les fils de trame 11 de cet ensemble de couches supérieur sont restés sensiblement perpendiculaires à la direction AR. Dans le reste de l'ébauche fibreuse, correspondant au corps de pale 14, les fils de chaine sont restés parallèles à la direction principale AR de la pale, et les fils de trame 11 ont aussi conservé leur orientation initiale, perpendiculaire à l'axe AR.

De manière analogue, l'ensemble de couches solidaires inférieur 23 est lui aussi décadré dans un plan parallèle à celui de la table 17, mais dans une direction inverse de la direction D, pour que ses fibres de chaîne soient aussi inclinées d'un angle A par rapport à l'axe AR, mais d'orientation opposée. Ainsi, l'angle formé par les fils de chaîne de l'ensemble de couches supérieur 22 avec les fils de chaîne de l'ensemble de couches inférieur 23 vaut le double de l'angle A.

L'ensemble de couches central 21 n'est quant à lui pas décadré, ses fibres de chaîne restant ainsi parallèles à la direction AR. Les fils de chaîne de l'ensemble de couches supérieur 22 et les fils de chaîne de l'ensemble de couches inférieur 23 sont ainsi inclinés d'angles opposés par rapport à un plan normal à l'ensemble de couches central 21 et orienté parallèlement aux fils de chaîne de cet ensemble de couches central 21.

Lors de l'opération de décadrage, il est également possible de désorienter les fils de trame 11 en les écartant de la base B, le long de l'un et/ou de l'autre des bords latéraux de l'ensemble de couches décadré. Ceci peut résulter de l'opération de décadrage, lorsque celle-ci est réalisée en tirant l'ensemble de couches solidaires parallèlement aux fils de trame et à la barrette 12, en exerçant un déplacement se rapprochant plus de celui d'une rotation que d'un déplacement de cisaillement pur.

D'une manière plus générale il est possible de modifier l'espacement des fils de trame le long de l'axe AR au niveau de l'extrémité, pour obtenir dans cette extrémité une proportion de fils de trame par rapport aux fils de chaine qui est différente de la proportion de fils de trame par rapport aux fils de chaine dans le corps de la pièce.

Il est aussi possible d'utiliser dans l'extrémité renforcée 16 des fils de trame 11 présentant une section inférieure à celle des fils de trame du corps 14, de manière à diminuer l'ondulation des fils de chaine 12 dans cette extrémité, cette modification de section étant implémentée lors du tissage.

Lorsque les ensembles de couches supérieur et inférieur 22 et 23 ont été décadrés, la situation de l'ébauche fibreuse correspond à celle de la figure 4. D'une manière générale, l'invention permet de traiter l'extrémité déliée comme un stratifié classique comprenant un nombre plus important d'ensembles de couches solidaires que dans l'exemple de la figure 4. En tout état de cause, l'empilement est organisé pour être équilibré, c'est-à-dire pour comporter autant d'ensembles de couches dont les fils de chaine sont inclinés de la valeur +A par rapport à la direction AR que d'ensembles de couches dont les fils de chaine sont inclinés de la valeur -A par rapport à cette direction AR.

L'empilement est avantageusement symétrique, c'est-à-dire qu'il comporte un plan de symétrie, de part et d'autre duquel les angles d'empilement des fils de chaine sont identiques : pour deux ensembles de couches solidaires situés de part et d'autre et à même distance de ce plan, l'angle des fils de chaine pour ces deux couches symétriques par rapport à la direction principale est le même.

A ce stade, un film de colle peut être appliqué au niveau des extrémités de fils des bords des ensembles de couches décadrés pour assurer que ces ensembles de couches restent dans leur état décadré au lieu de revenir vers leur état initial. Ce film de colle est préférentiellement appliqué dans des zones de l'ébauche fibreuse correspondant à des parties qui sont ensuite retirées par usinage de la pale brute.

Ce maintien peut aussi être réalisé en utilisant des fils supplémentaires ajoutés par couture ou par piqûre en direction transverse, c'est-à-dire traversant les ensembles de couches solidaires. Ces fils supplémentaire peuvent être des fils de fibre de verre, de carbone ou de kevlar assurant principalement le maintien des fils de l'ébauche fibreuse. Ce maintien peut aussi être réalisé par toute autre méthode appropriée.

Comme visible sur la figure 4, à ce stade, la largeur utile de l'ébauche fibreuse, notée L, c'est-à-dire la largeur sur laquelle elle comporte les trois ensembles de couches solidaires dans le sens de son épaisseur, est devenue inférieure à sa largeur initiale. Ceci est dû au fait que le décadrage a rapproché l'un des bords latéraux de l'ensemble de couches supérieur de l'axe AX, et de même pour l'ensemble de couches inférieur.

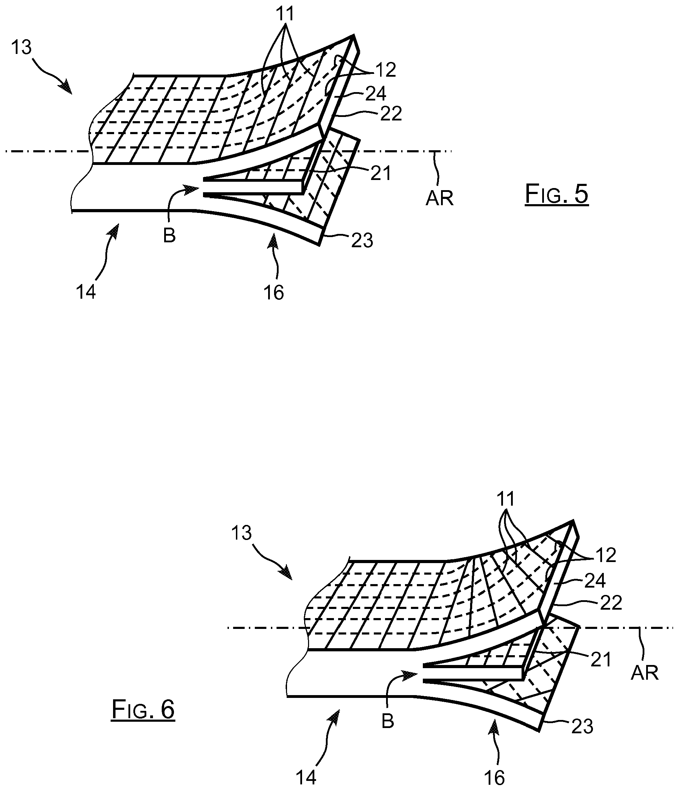

Le cas échéant, l'ébauche fibreuse peut alors être découpée le long de ses deux bords longitudinaux parallèlement à la direction AR, pour présenter sur toute sa longueur et en particulier au niveau de ses extrémités une épaisseur constante. L'ébauche de fibre de largeur utile constante, et dont les ensembles de couches solidaires ont été encollés ou maintenus cohérents par un autre moyen, se présente alors comme illustré sur la figure 5.

A ce stade, les trois ensembles de couches sont réunis les uns contre les autres pour être repliés ensemble perpendiculairement au plan de la table, de façon à adopter une forme correspondant approximativement à celle de la plateforme ou extrémité 3 ou 4 du redresseur.

D'autres opérations complémentaires peuvent alors être réalisées pour constituer, à partir de cette ébauche fibreuse, une préforme prête à être installée dans une installation d'injection correspondante en vue de procéder à l'injection de la matrice permettant de lier les fils de l'ébauche fibreuse pour constituer le redresseur.

Le redresseur ainsi obtenu présente une portion correspondant à la pale qui est constituée de tissu tridimensionnel non délié, et une portion déliée correspondant à ses extrémités d'accouplement qui est un empilement d'ensembles de couches de tissus ayant des orientations différentes.

La pale présente ainsi les caractéristiques mécaniques propres au tissu tridimensionnel offrant notamment une tenue significative aux impacts, et les extrémités de fixation présentent d'autres caractéristiques mécaniques comme en particulier une meilleure tenue au cisaillement.

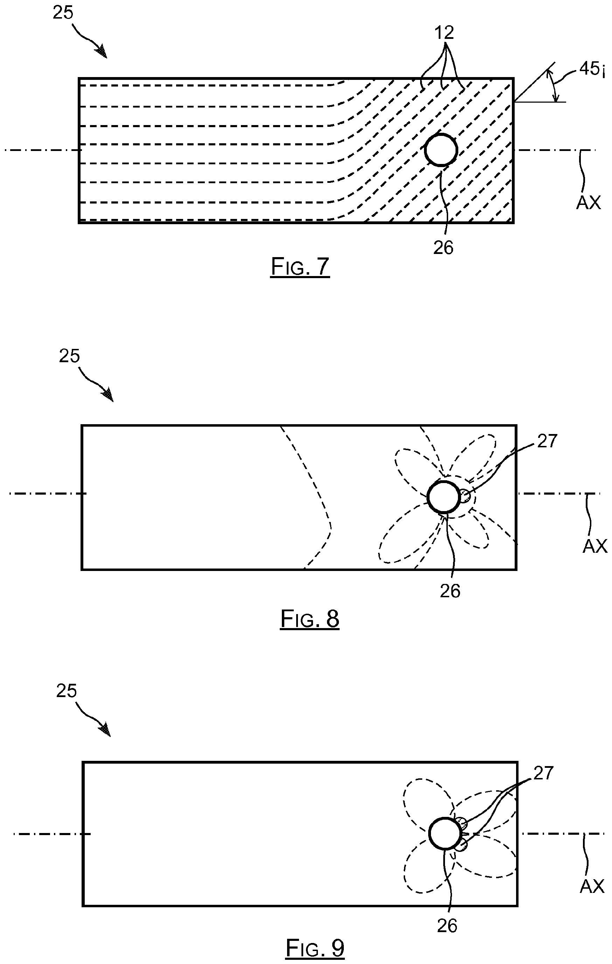

Par ailleurs, un calcul par éléments finis basé sur une éprouvette 25 représentée sur la figure 7 et correspondant à l'ébauche fibreuse de la figure 5 dont les ensembles de couches solidaires ont été réunis sans être repliés avant injection de la matrice, montre que l'invention permet de réduire la concentration de contraintes en cas de sollicitation en cisaillement.

Ce modèle d'éprouvette 25 comporte au niveau de son extrémité de fixation un ensemble de couches solidaires supérieur décadré à 45 degrés et un ensemble de couches solidaires inférieur décadré à -45 degrés, avec un trou de fixation 26 traversant cette extrémité d'accouplement. Sa simulation numérique vis-à-vis d'une sollicitation en cisaillement lorsque le trou 26 est bloqué en position et que des efforts de type cisaillement, c'est-à-dire perpendiculaires à l'axe AR, sont appliqués au corps montre une réduction de la concentration de contrainte.

En effet, une comparaison des figures 8 et 9 montrant la répartition des contraintes dans une éprouvette selon l'invention et une éprouvette selon l'état de la technique, c'est-à-dire entièrement en tissu tridimensionnel, fait apparaître que les zones de concentration de contraintes, repérées par 27 sont moins importantes sur la figure 8 que sur la figure 9. Concrètement, la contrainte de cisaillement maximale dans le cas de la figure 8 est inférieure de 20% à la contrainte de cisaillement maximale dans le cas de la figure 9.

Par ailleurs, d'autres simulations numériques montrent que la raideur, c'est-à-dire la tenue en traction de l'éprouvette selon l'invention n'est pas réduite par rapport à celle d'une éprouvette de l'Etat de la technique, alors que la tenue mécanique est augmentée de 20% environ.

Dans l'exemple des figures, l'invention est mise en œuvre avec un redresseur ayant des extrémités de fixation s'étendant en plateformes d'un côté de la pale par rapport à son axe. Mais il est également possible de l'appliquer à des fixations de forme autre, comme par exemple le redresseur divulgué dans le document de brevet WO 2013/079860.

Par ailleurs, l'invention couvre d'une manière générale un agencement comprenant une déliaison en un nombre quelconque d'ensemble de couches solidaires au niveau de l'extrémité renforcée, sans être limité à deux ou trois ensembles de couches solidaires.

D'une manière générale, l'invention permet de fabriquer une pièce à partir d'un tissu tridimensionnel avec une ou plusieurs déliaisons exploitées pour améliorer la tenue en cisaillement des extrémités de fixation de cette pièce.

Dans l'exemple des figures, l'invention est appliquée à un redresseur de flux, mais elle s'applique à d'autres types de pièces comprenant une extrémité d'accouplement intégrant un trou, telle qu'une chape, pour lesquelles on souhaite accroître la résistance à l'arrachement de ce trou, c'est-à-dire la tenue mécanique aux sollicitations de cisaillement au voisinage du trou. L'invention s'applique ainsi notamment au renforcement mécanique d'une chape de contre fiche d'atterrisseur du type décrit notamment dans le document de brevets FR2893532 ou FR2953160.

Il est à noter que dans l'exemple décrit, l'ébauche fibreuse est constituée de fils. Ces fils qui sont typiquement en carbone peuvent se présenter dans cette ébauche sous forme de fils unitaires ou bien sous forme de torons.

## Revendications

1. Procédé de fabrication d'une pièce en matériau composite comportant un corps (14) prolongé par une extrémité d'accouplement renforcée (16), comprenant les opérations de :
- formation d'une ébauche fibreuse (13) à partir d'un tissu tridimensionnel comportant des fils de chaine (12) orientés selon une direction principale (AR) avec déliaison d'au moins une extrémité (16) de l'ébauche fibreuse (13) pour constituer au moins deux ensembles de couches solidaires (21, 22, 23) ;
- décadrage à plat d'au moins un ensemble de couches solidaires (22, 23) par décalage d'un bord d'extrémité (24) de cet ensemble de couches solidaires (22, 23) en appliquant à ce bord d'extrémité (24) un déplacement de cisaillement orienté parallèlement à l'ensemble de couches solidaires (22, 23) et perpendiculairement à la direction principale (AR), pour incliner les fils de chaîne (12) de cet ensemble de couches solidaires (22, 23) par rapport à la direction principale (AR) ;
- mise en forme de l'ébauche fibreuse pour constituer une préforme ;
- injection d'une matrice dans la préforme.

2. Procédé selon la revendication 1, dans lequel la déliaison de l'ébauche fibreuse est réalisée durant une opération de tissage du tissu tridimensionnel selon un plan de déliaison parallèle à la direction principale (AR) en agençant un cheminement des fils de trame (11) sans traversée du plan de déliaison dans l'extrémité renforcée (16).

3. Procédé selon la revendication 1 ou 2, dans lequel à l'issue de l'opération de décadrage, les fils de chaine sont inclinés d'une valeur angulaire comprise entre +45 degrés et -45 degrés par rapport à la direction principale (AR).

4. Procédé selon l'une des revendications précédentes, comprenant l'application d'un moyen de fixation tel qu'un film de colle à une portion de chaque ensemble de couches solidaires décadré pour le maintenir dans en configuration décadrée.

5. Procédé selon l'une des revendications précédentes, comprenant l'ajout de fils de fibre de verre, de carbone ou de kevlar par couture ou par piqûre traversant plusieurs ensembles de couches solidaires décadrés pour les maintenir entre eux.

6. Procédé selon l'une des revendications précédentes, dans lequel l'extrémité d'accouplement comporte une proportion de fils de trame (11) par rapport aux fils de chaine (12) qui est différente de la proportion de fils de trame (11) par rapport aux fils de chaine (12) dans le corps (14).

7. Procédé selon l'une des revendications précédentes, dans lequel les fils de trame (11) présentent dans l'extrémité renforcée (16) une section inférieure à la section des fils de trame (11) dans le corps (14).

8. Procédé selon l'une des revendications précédentes, de fabrication d'un redresseur (1) de flux de turbomachine en matériau composite comprenant un corps formant pale (2) prolongé par au moins une extrémité d'accouplement par fixation (3, 4), dans lequel la direction principale (AR) correspond à la direction du corps.

9. Procédé selon l'une des revendications précédentes, dans lequel l'extrémité (16) est déliée en plusieurs ensembles de couches solidaires (21, 22, 23), et dans lequel ces ensembles de couches solidaires (21, 22, 23) sont décadrés de manière équilibrée pour que la somme des angles des fils chaine (12) de chaque ensemble de couches solidaires (21, 22, 23) par rapport à un plan parallèle à la direction principale (AR) et normal à ces ensembles de couches solidaires soit nulle.

10. Procédé selon l'une des revendications précédentes, dans lequel l'extrémité (16) est déliée en plusieurs ensembles de couches solidaires et dans lequel ces ensembles de couches solidaires sont décadrés de manière symétrique afin de comporter un plan de symétrie pour lequel chaque paire d'ensembles de couches solidaires situées de part et d'autre et à même distance de ce plan de symétrie comporte des fils de chaine (12) ayant la même inclinaison par rapport à un plan parallèle à la direction principale (AR) et normal à ces ensembles de couches solidaires.

11. Procédé selon les revendications 8, dans lequel l'extrémité (16) est déliée en un ensemble de couches solidaires central (21), un ensemble de couches solidaires supérieur (22) et un ensemble de couches solidaires inférieur (23), dans lequel l'ensemble de couches solidaires supérieur (22) et l'ensemble de couches solidaires inférieur (23) sont décadrées pour que les fils de chaine (12) de ces ensembles de couches solidaires décadrés (22, 23) soient inclinées d'angles opposées par rapport à un plan qui est normal à l'ensemble de couches solidaires central (21) et parallèle aux fils de chaîne de l'ensemble de couches solidaires central (21).

12. Procédé selon la revendication 9, dans lequel les ensembles de couches solidaires déliés (21, 22, 23) sont pliés par rapport au reste de l'ébauche fibreuse (13) pour constituer une extrémité d'accouplement du redresseur (1), avant injection de la matrice.

## Patentansprüche

1. Verfahren zur Herstellung eines Verbundmaterialteils mit einem durch ein verstärktes Kopplungsende (16) verlängerten Körper (14), mit den folgenden Schritten:
- Bildung eines Faserrohlings (13) aus einem dreidimensionalen Gewebe mit in einer Hauptrichtung (AR) ausgerichteten Kettfäden (12) mit Unterteilung von mindestens einem Ende (16) des Faserrohlings (13), um mindestens zwei Einheiten von einstückigen Lagen (21, 22, 23) zu bilden;
- flächiges Beschneiden mindestens einer Einheit von einstückigen Lagen (22, 23) durch Verschiebung einer Endkante (24) dieser Einheit von einstückigen Lagen (22, 23), indem an diese Endkante (24) eine Scherverschiebung angelegt wird, die parallel zu der Einheit von einstückigen Lagen (22, 23) und senkrecht zur Hauptrichtung (AR) ausgerichtet ist, um die Kettfäden (12) dieser Einheit von einstückigen Lagen (22, 23) gegenüber der Hauptrichtung (AR) zu neigen;
- Formen des Faserrohlings zur Bildung einer Vorform;
- Einspritzen einer Matrix in die Vorform.

2. Verfahren nach Anspruch 1, wobei das Unterteilen des Faserrohlings während eines Webvorgangs des dreidimensionalen Gewebes in einer Unterteilungsebene parallel zur Hauptrichtung (AR) ausgeführt wird, indem ein Weg der Schussfäden (11) ohne Durchquerung der Unterteilungsebene in dem verstärkten Ende (16) angeordnet wird.

3. Verfahren nach Anspruch 1 oder 2, wobei am Ende des Beschneidungsvorgangs die Kettfäden um einen Winkelwert im Bereich von +45 Grad bis -45 Grad gegenüber der Hauptrichtung (AR) geneigt sind.

4. Verfahren nach einem der vorhergehenden Ansprüche, mit der Aufbringung eines Befestigungsmittels, wie z.B. eines Klebstofffilms, auf einen Abschnitt jeder beschnittenen Einheit von einstückigen Lagen, um sie in der beschnittenen Gestalt beizubehalten.

5. Verfahren nach einem der vorhergehenden Ansprüche, mit der Hinzufügung von Fäden aus Glasfaser, Kohlefaser oder Kevlar durch Nähen oder durch Stechen durch mehrere beschnittene Einheiten von einstückigen Lagen hindurch, um sie zusammenzuhalten.

6. Verfahren nach einem der vorhergehenden Ansprüche, wobei das Kopplungsende ein Verhältnis von Schussfäden (11) zu den Kettfäden (12) aufweist, welches sich von dem Verhältnis von Schussfäden (11) zu den Kettfäden (12) in dem Körper (14) unterscheidet.

7. Verfahren nach einem der vorhergehenden Ansprüche, wobei die Schussfäden (11) in dem verstärkten Ende (16) einen kleineren Querschnitt als den Querschnitt von Schussfäden (11) in dem Körper (14) aufweisen.

8. Verfahren nach einem der vorhergehenden Ansprüche zur Herstellung eines Strömungsgleichrichters (1) einer Turbomaschine aus Verbundmaterial mit einem durch mindestens ein Kopplungsende durch Befestigung (3, 4) verlängerten Schaufelkörper (2), in welchem die Hauptrichtung (AR) der Richtung des Körpers entspricht.

9. Verfahren nach einem der vorhergehenden Ansprüche, wobei das Ende (16) in mehrere Einheiten von einstückigen Lagen (21, 22, 23) unterteilt ist, und wobei diese Einheiten von einstückigen Lagen (21, 22, 23) derart ausgeglichen beschnitten sind, dass die Summe der Winkel der Kettfäden (12) jeder Einheit von einstückigen Lagen (21, 22, 23) in Bezug auf eine zur Hauptrichtung (AR) parallele und zu den Einheiten von einstückigen Lagen senkrechte Ebene null ist.

10. Verfahren nach einem der vorhergehenden Ansprüche, wobei das Ende (16) in mehrere Einheiten von einstückigen Lagen unterteilt ist und wobei diese Einheiten von einstückigen Lagen derart symmetrisch beschnitten sind, dass sie eine Symmetrieebene aufweisen, zu welcher jedes Paar von Einheiten von einstückigen Lagen, die sich auf beiden Seiten und in gleichem Abstand von dieser Symmetrieebene befinden, Kettfäden (12) aufweist, welche dieselbe Neigung bezüglich einer zur Hauptrichtung (AR) parallelen und zu diesen Einheiten von einstückigen Lagen senkrechten Ebene haben.

11. Verfahren nach Anspruch 8, wobei das Ende (16) in eine mittige Einheit von einstückigen Lagen (21), eine obere Einheit von einstückigen Lagen (22) und eine untere Einheit von einstückigen Lagen (23) unterteilt ist, wobei die obere Einheit von einstückigen Lagen (22) und die untere Einheit von einstückigen Lagen (23) unterteilt sind, so dass die Kettfäden (12) dieser beschnittenen Einheiten von einstückigen Lagen (22, 23) unter entgegengesetzten Winkeln bezüglich einer Ebene geneigt sind, die senkrecht zu der mittigen Einheit von einstückigen Lagen (21) und parallel zu den Kettfäden der mittigen Einheit von einstückigen Lagen (21) verläuft.

12. Verfahren nach Anspruch 9, wobei die unterteilten Einheiten von einstückigen Lagen (21, 22, 23) bezüglich des übrigen Faserrohlings (13) gefaltet sind, um vor Einspritzung der Matrix ein Kopplungsende des Gleichrichters (1) auszubilden.

## Claims

1. Method for manufacturing a composite material part comprising a body (14) extended by a reinforced coupling end (16), including the operations of:
- forming a fibrous blank (13) from a three-dimensional fabric comprising warp threads (12) oriented in a main direction (AR) with separation of at least one end (16) of the fibrous blank (13) in order to constitute at least two sets of integrated layers (21, 22, 23);
- shifting at least one set of integrated layers (22, 23) in a planar configuration by offsetting one end edge (24) of said set of integrated layers (22, 23) by applying to said end edge (24) a shear displacement oriented parallel to the set of integrated layers (22, 23) and perpendicular to the main direction (AR), in order to incline the warp threads (12) of said set of integrated layers (22, 23) relative to the main direction (AR);
- shaping of the fibrous blank in order to constitute a preform;
- injection of a matrix into the preform.

2. Method according to claim 1, wherein the separation of the fibrous blank is carried out during an operation for weaving the three-dimensional fabric according to a separation plane parallel to the main direction (AR) by arranging a routing of the weft threads (11) without crossing the separation plane in the reinforced end (16).

3. Method according to claim 1 or 2, wherein after the shifting operation, the warp threads are inclined by an angular value between +45 degrees and -45 degrees relative to the main direction (AR).

4. Method according to one of the preceding claims, including the application of a means of attachment such as a film of glue to a portion of each shifted set of integrated layers in order to hold same in shifted configuration.

5. Method according to one of the preceding claims, including the addition of threads of fibreglass, carbon or Kevlar by sewing or by stitching crossing a plurality of shifted sets of integrated layers in order to hold same together.

6. Method according to one of the preceding claims, wherein the coupling end comprises a proportion of weft threads (11) relative to the warp threads (12) that is different from the proportion of weft threads (11) relative to the warp threads (12) in the body (14).

7. Method according to one of the preceding claims, wherein the weft threads (11) have in the reinforced end (16) a section smaller than the section of the weft threads (11) in the body (14).

8. Method according to one of the preceding claims for manufacturing a turbomachine flow straightener (1) made from composite material including a body forming a blade (2) extended by at least one attachment coupling end (3, 4), wherein the main direction (AR) corresponds to the direction of the body.

9. Method according to one of the preceding claims, wherein the end (16) is separated into a plurality of sets of integrated layers (21, 22, 23), and wherein said sets of integrated layers (21, 22, 23) are shifted in a balanced manner so that the sum of the angles of the warp threads (12) of each set of integrated layers (21, 22, 23) relative to a plane parallel to the main direction (AR) and normal to said sets of integrated layers is zero.

10. Method according to one of the preceding claims, wherein the end (16) is separated into a plurality of sets of integrated layers and wherein said sets of integrated layers are shifted symmetrically in order to comprise a plane of symmetry for which each pair of sets of integrated layers located on either side and at same distance from said plane of symmetry comprises warp threads (12) having the same inclination relative to a plane parallel to the main direction (AR) and normal to said sets of integrated layers.

11. Method according to claim 8, wherein the end (16) is separated into a central set of integrated layers (21), an upper set of integrated layers (22) and a lower set of integrated layers (23), wherein the upper set of integrated layers (22) and the lower set of integrated layers (23) are shifted so that the warp threads (12) of said shifted sets of integrated layers (22, 23) are inclined by opposite angles relative to a plane that is normal to the central set of integrated layers (21) and parallel to the warp threads of the central set of integrated layers (21).

12. Method according to claim 9, wherein the separated sets of integrated layers (21, 22, 23) are folded relative to the remainder of the fibrous blank (13) in order to constitute a coupling end of the straightener (1), before injection of the matrix.
